Europäisches Patentamt

European Patent Office

Office européen des brevets

(11) Veröffentlichungsnummer: **0 316 533 B1**

# EUROPÄISCHE PATENTSCHRIFT

(45) Veröffentlichungstag der Patentschrift: **18.12.91**

(21) Anmeldenummer: **88115025.4**

(22) Anmeldetag: **14.09.88**

(51) Int. Cl.5: **G01B 11/30**, G01N 21/55, G01N 21/88

(54) **Prüfeinrichtung zur Erfassung von räumlichen Unregelmässig-keiten in der Oberflächenstruktur eines Objektes.**

(30) Priorität: **30.09.87 DE 3733041**

(43) Veröffentlichungstag der Anmeldung:
**24.05.89 Patentblatt 89/21**

(45) Bekanntmachung des Hinweises auf die
Patenterteilung:
**18.12.91 Patentblatt 91/51**

(84) Benannte Vertragsstaaten:
**BE DE FR GB IT NL SE**

(56) Entgegenhaltungen:
**DE-A- 3 406 066**
**DE-A- 3 427 838**

(73) Patentinhaber: **SIEMENS AKTIENGESELL-SCHAFT**
**Wittelsbacherplatz 2**
**W-8000 München 2(DE)**

(72) Erfinder: **Gust, Berno**
**Sebastian-Kneipp-Strasse 12a**
**W-7517 Waldbronn(DE)**
Erfinder: **Marguerre, Hans-Helmut, Dipl-Phys.**
**Königstrasse 21**
**W-7541 Straubenhardt 2(DE)**

**Beschreibung**

Die Erfindung bezieht sich auf eine Prüfeinrichtung zur Erfassung von räumlichen Unregelmäßigkeiten in der Oberflächenstruktur eines Objekts gemäß dem Oberbegriff des Anspruchs 1.

Bei einer bekannten Anordnung (DE-A-34 06 066) zur optischen Erfassung räumlicher Unebenheiten ist die Oberfläche des zu untersuchenden reflektierenden bzw. durchleuchtbaren Objekts mit Lichtstrahlen unter einem vorgegebenen Winkel beleuchtet. Die vom Objekt reflektierten bzw. durchgelassenen Lichtstrahlen werden von einem Retroreflektor und wiederum von der Oberfläche bzw. durch sie hindurch in das Objektiv einer Videokamera reflektiert. Aufgrund der starken Winkelabhängigkeit der Intensität der Reflexion am Retroreflektor ergeben sich starke Änderungen der Lichtstrahlauffächerung in der Kamera bei Unebenheiten am Objekt, wodurch diese leicht detektiert werden können.

Das optische Prinzip erfordert eine schräge Betrachtung der zu prüfenden Oberfläche mit einem Bildaufnahmesensor (beispielsweise unter 45˚). Dadurch bedingt ist eine trapezförmige Verzerrung des Bildfeldes. Außerdem können insbesondere bei kurzen Entfernungen die oberen und unteren Bildpartien nicht gleichzeitig scharf abgebildet werden.

Aufgabe der Erfindung ist es, die Integration der Kameraanordnung, der Beleuchtungseinrichtung und aller optischen Komponenten zu einer kompakten und leichten Einheit zu erreichen, bei verbesserten Auswertemöglichkeiten des von der zu prüfenden Oberfläche reflektierten Lichts.

Zur Lösung der gestellten Aufgabe weist eine Prüfeinrichtung der eingangs angegebenen Art die Merkmale des Kennzeichens des Anspruchs 1 auf. Vorteilhafte Ausgestaltungen der Erfindung sind in den abhängigen Ansprüchen angegeben.

Bei schräger Betrachtung einer Oberfläche werden die Probleme der Verzerrung und der begrenzten Tiefenschärfe gemäß der Erfindung in vorteilhafter Weise dadurch gelöst, daß das Objektiv relativ zur optischen Achse seitlich versetzt wird. Dies ist üblicherweise jedoch nur mit vergleichsweise teuren Spezialobjektiven für sehr große Bildfelder möglich. Daher wurde gemäß der Erfindung die geometrische Bildverzerrung minimiert und der Tiefenschärfenbereich erweitert durch einen großen Abstand zwischen Oberfläche und Bildaufnahmesensor. Um trotzdem eine kompakte Optikeinheit für entsprechende Anwendungen, beispielsweise in Handhabungsautomaten, zu erhalten, ist daher eine zweifache Umlenkung der Lichtstrahlen über Spiegel vorhanden.

Der notwendige Lichtabsorber läßt sich in einfacher Weise realisieren, indem nur eine mattschwarze Fläche in großem Abstand vom Halbspiegel angebracht wird. Der von diesem Lichtabsorber zum Halbspiegel bzw. zur Kamera reflektierte Lichtstrom, der die Abbildung stört, ist in erster Näherung umgekehrt proportional zu diesem Abstand. Um die Bauform des Kameramoduls klein zu halten, wird hier der mattschwarzlackierte Innenraum der Optikeinheit als Lichtabsorber verwendet. Hierzu ist eine Strahlumlenkung mit einem ebenen oder gekrümmten Spiegel (z. B. Parabolspiegel) vorteilhaft.

Zur Beleuchtung der Oberfläche ist die Einspiegelung von Licht einer Punktlichtquelle, beispielsweise über einen halbdurchlässigen Spiegel, erforderlich. Damit die Kamera über den Halbspiegel nicht gleichzeitig ein Oberflächenbild und ein Bild der Umgebung (durch den Spiegel) sieht, ist dort gemäß einer Ausführungsform eine Blende angebracht. Diese Blende muß das am Spiegel reflektierte Licht möglichst vollständig absorbieren.

Für ähnliche Optikanordnungen gebräuchliche Lichtabsorber ("Lichtfallen") absorbieren das Licht in zwei Stufen: Im ersten Schritt gelangt Licht auf eine glänzend schwarzlackierte Oberfläche. Das daran gespiegelte und umgelenkte Licht gelangt danach auf eine mattschwarzlackierte Oberfläche.

Die Erfindung wird anhand der Figuren erläutert, wobei

Figur 1

ein erstes Ausführungsbeispiel der Prüfeinrichtung mit einem Strahlengang zur Beleuchtung des Objekts,

Figur 2

dasselbe Ausführungsbeispiel mit absorbierten Lichtanteilen und

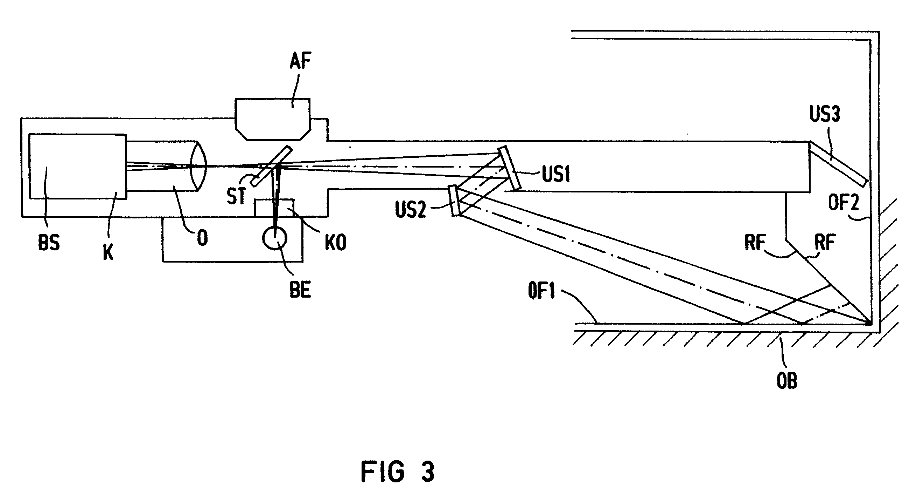

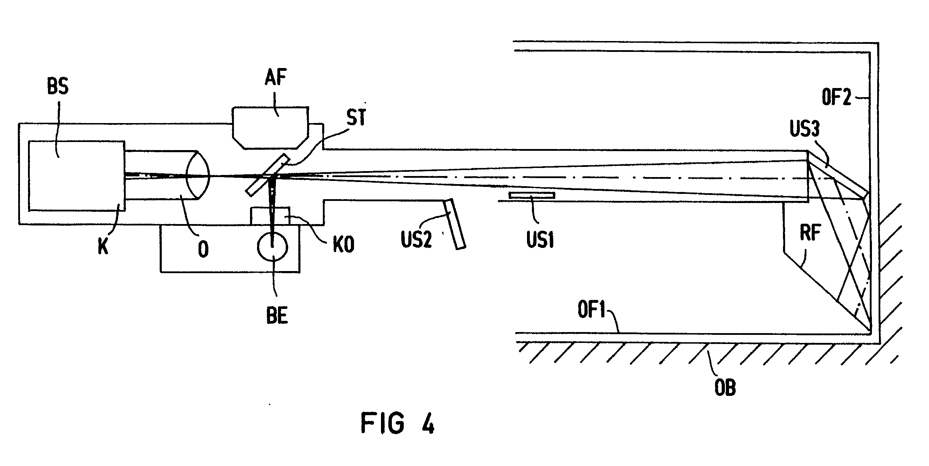

die Figuren 3 und 4

ein weiteres Ausführungsbeispiel der Prüfeinrichtung mit verschiedenen Beleuchtungsmöglichkeiten für das zu prüfende Objekt darstellen.

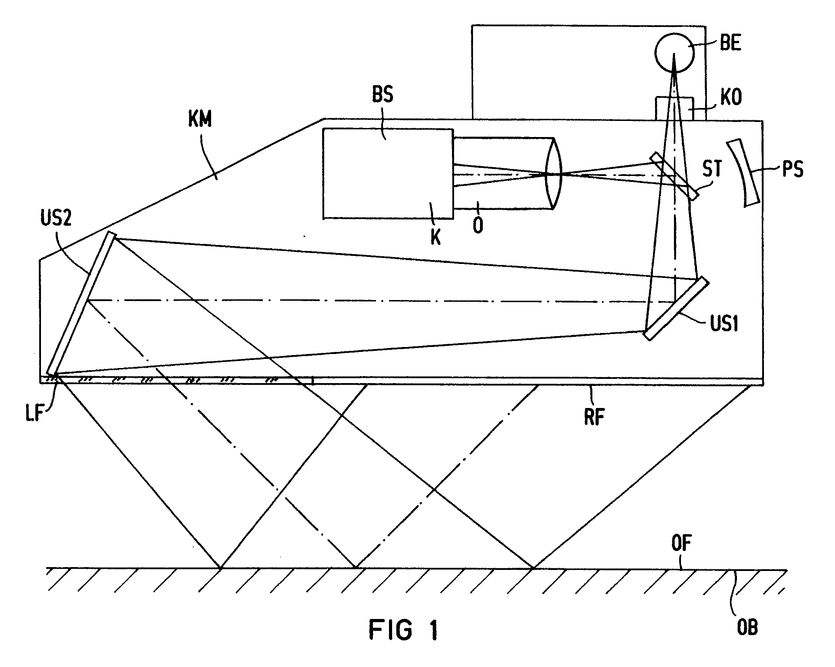

In der Figur 1 ist ein Kameramodul KM gezeigt, das eine Beleuchtungseinrichtung BE, die eine Punktlichtquelle enthält, einen Bildaufnahmesensor BS mit einer Videokamera K und einem Objektiv O sowie einen Umlenkspiegel US1 und einen Umlenkspiegel US2 enthält. Im unteren Teil des Kameramoduls KM ist ein Retroreflektor RF angebracht, und es ist ein Lichtdurchlaßfenster LF vorhanden.

Das Licht der Beleuchtungseinrichtung BE wird über einen Kondensor mit Polarisationsfilter KO und einen Strahlteiler ST auf den ersten Umlenkspiegel US1 geführt. Nach einer Reflexion am ersten Umlenkspiegel US1 und am zweiten Umlenkspiegel US2 wird das Licht durch das Fenster LF auf eine Oberfläche OF eines zu prüfenden Objekts OB geleitet. Aufgrund des Auftrittswinkels auf die Oberfläche OF (ca. 45˚) wird das Licht hiervon auf den Retroreflektor RF reflektiert, von wo es in sich zurück auf die Oberfläche OF reflektiert und somit im gleichen Strahlenverlauf wie der Verlauf des von der Beleuchtungseinrichtung BE kommenden Lichts bis zum Strahlteiler ST zurückreflektiert wird. Vom Strahlteiler ST gelangt es in die Videokamera K des Bildaufnahmesensors BS.

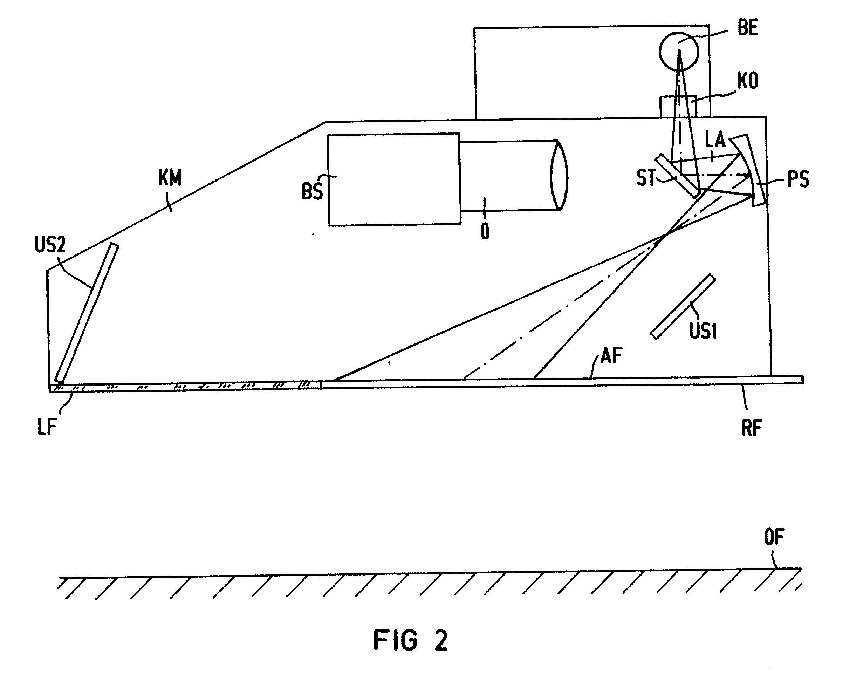

In der Figur 1 ist noch ein Parabolspiegel PS als weiterer Spiegel angeordnet, dessen Funktion anhand der Figur 2 erläutert wird, die ansonsten die gleichen Bestandteile enthält wie das Ausführungsbeispiel nach der Figur 1. Mit dem Parabolspiegel PS wird erreicht, daß die an sich die Aufnahmequalität störenden Lichtanteile LA des Lichts der Beleuchtungseinrichtung BE, die vom Strahlteiler ST reflektiert werden, auf eine Absorptionsfläche AF gelenkt werden, die somit praktisch als "Lichtfalle" für diese Lichtanteile LA wirkt.

In den Figuren 3 und 4 ist abweichend von dem Ausführungsbeispiel nach den Figuren 1 und 2 eine andere Anordnung der Absorptionsfläche AF und der Umlenkspiegel US1 und US2 gewählt, bei welcher der erste Umlenkspiegel US1 klappbar angeordnet ist. In der Darstellung nach der Figur 3, also im aufgeklappten Zustand des Umlenkspiegels US1, wird der Lichtstrahl auf die Oberfläche OF1 des zu prüfenden Objekts OB geleitet und von dieser auf den Retroreflektor RF und wieder zurück - in der gleichen Weise wie beim Ausführungsbeispiel nach den Figuren 1 und 2 - gelenkt. Bei der Darstellung nach der Figur 4 ist der erste Umlenkspiegel US1 heruntergeklappt, so daß die Lichtstrahlen auf einen dritten Umlenkspiegel US3 gelangen, von dem eine weitere Oberfläche OF2 des zu prüfenden Objekts OB untersucht werden kann. Der Retroreflektor RF ist bei diesem Ausführungsbeispiel beidseitig mit einer Retroreflexschicht versehen. Mit diesem Ausführungsbeispiel ist es also möglich, auch unterschiedliche und schwierig zugängliche Oberflächen in zu prüfenden Objekten zu untersuchen.

## Patentansprüche

1.  Prüfeinrichtung zur Erfassung von räumlichen Unregelmäßigkeiten in der Oberflächenstruktur eines Objektes (OB)
    - mit einer Beleuchtungseinrichtung (BE) zur Beleuchtung der Objektoberfläche (OF),
    - mit einem Retroreflektor (RF), der derart angeordnet ist, daß auf die Oberfläche (OF) auftreffende Lichtstrahlen nach Reflexion an der Oberfläche auf ihn auftreffen und in sich zurückreflektiert werden, und
    - mit einem Bildaufnahmesensor (BS) zur Auswertung des zurückreflektierten Lichtes, der Mittel zur Aufnahme eines Bildes der Objektoberfläche aufweist,

    **dadurch gekennzeichnet,**
    - daß ein erster Umlenkspiegel (US1) vorhanden ist, der das von der Beleuchtungseinrichtung kommende Licht in eine annähernd parallel zur optischen Achse des Bildaufnahmesensors (BS) verlaufende Richtung reflektiert,
    - daß ein zweiter Umlenkspiegel (US2) vorhanden ist, der das vom ersten Umlenkspiegel (US1) kommende Licht in einem vorgegebenen Winkel auf die zu prüfende Oberfläche reflektiert, und
    - daß die Umlenkspiegel (US1 und US2) derart angeordnet sind, daß durch einen vergrößerten Abstand zwischen der Objektoberfläche (OF) und dem Bildaufnahmesensor (BS) geometrische Verzerrungen des Bildes minimiert werden und der Tiefenschärfebereich erweitert wird.

2.  Prüfeinrichtung nach Anspruch 1,
    **dadurch gekennzeichnet,**
    daß der erste Umlenkspiegel (US1) derart klappbar ist, daß im aufgeklappten Zustand das Licht auf den zweiten Umlenkspiegel (US2) gelenkt wird und im heruntergeklappten Zustand das von der Beleuchtungseinrichtung (BE) kommende Licht direkt auf einen dritten Umlenkspiegel (US3) gelangt, zur Beleuchtung von verschiedenen Oberflächen (OF1, OF2) des Objekts (OB).

3.  Prüfeinrichtung nach einem der vorhergehenden Ansprüche,
    **dadurch gekennzeichnet,**
    daß die Beleuchtungseinrichtung (BE) und der Bildaufnahmesensor (BS) derartig angeordnet sind, daß die optische Achse des Bildaufnahmesensors (BS) und die optische Achse des Lichtes der Beleuchtungseinrichtung (BE) rechtwinklig zueinander stehen und jeweils im Winkel von 45° auf die verschiedenen Seiten eines Strahlteilers (ST) gelangen, und daß eine Lichtabsorptionseinrichtung vorgesehen ist, in die derjenige Lichtanteil (LA) der Beleuchtungseinrichtung (BE) geführt ist, der vom Strahlteiler nicht auf die Oberfläche (OF) geführt ist.

4.  Prüfeinrichtung nach Anspruch 3,
    **dadurch gekennzeichnet,**
    daß die Lichtabsorptionseinrichtung einen weiteren Spiegel enthält, der die auf ihn geführten Lichtanteile (LA) auf mattschwarze Gehäuseteile lenkt.

5.  Prüfeinrichtung nach Anspruch 4,

**dadurch gekennzeichnet,**
daß der weitere Spiegel ein Parabolspiegel (PS) ist.

## Claims

1. Testing device for detecting spatial irregularities in the surface structure of an object (OB)
   - having an illuminating device (BE) for the illumination of the object surface (OF),
   - having a retro-reflector (RF) which is arranged such that light beams impinging upon the surface (OF) after reflection at the surface impinge upon said reflector and are reflected back on themselves and
   - having an image-pick-up sensor (BS) for evaluating the light reflected back and with means for picking up an image of the object surface,
   characterised
   - in that there is a first deviation reflector (US1) which reflects the light coming from the illuminating device into a direction which runs approximately parallel to the optical axis of the image-pick-up sensor (BS),
   - in that there is a second deviation reflector (US2) which reflects the light coming from the first deviation reflector (US1) at a preset angle onto the surface to be tested and
   - in that the deviation reflectors (US1 and US2) are arranged such that as a result of an increased distance between the object surface (OF) and the image-pickup sensor (BS) geometrical distortions of the image are minimized and the range of depth of focus is extended.

2. Testing device according to claim 1, characterised in that the first deviation reflector (US1) can be tilted such that in the state in which it is tilted up the light is directed onto the second deviation reflector (US2) and in the state in which it is tilted down the light coming from the illuminating device (BE) arrives directly on a third deviation reflector (US3) for the purpose of illuminating various surfaces (OF1, OF2) of the object (OB).

3. Testing device according to one of the preceding claims, characterised in that the illuminating device (BE) and the image-pick-up sensor (BS) are arranged such that the optical axis of the image-pick-up sensor (BS) and the optical axis of the light of the illuminating device (BE) stand at right angles to each other and in each case reach the various sides of a beam splitter (ST) at an angle of 45° and in that a light-absorbing device is provided into which there is guided that portion of light (LA) of the illuminating device (BE) which is not guided onto the surface (OF) by the beam splitter.

4. Testing device according to claim 3, characterised in that the light-absorbing device contains a further reflector which directs the portions of light (LA) guided onto it onto matt black housing portions.

5. Testing device according to claim 4, characterised in that the further reflector is a parabolic reflector (PS).

## Revendications

1. Dispositif de contrôle pour détecter des irrégularités spatiales dans la structure superficielle d'un objet (OB), comportant
   - un dispositif d'éclairage (BE) servant à éclairer la surface (OF) de l'objet,
   - un rétroréflecteur (RF) disposé de telle sorte que des rayons lumineux tombent sur la surface (OF), rencontrent, après réflexion sur la surface, le rétroréflecteur et sont en soi rétroréfléchis, et
   - un détecteur (BS) d'enregistrement d'images, qui sert à détecter la lumière rétroréfléchie et comporte des moyens pour enregistrer une image sur la surface de l'objet,
   caractérisé par le fait
   - qu'il est prévu un premier miroir de renvoi (US1) qui réfléchit la lumière arrivant du dispositif d'éclairage, dans une direction approximativement parallèle à l'axe optique du détecteur d'enregistrement d'images (BS),
   - qu'il est prévu un second miroir de renvoi (US2), qui réfléchit la lumière arrivant du premier miroir de renvoi (US1), sous un angle prédéterminé, sur la surface à contrôler, et
   - que les miroirs de renvoi (US1 et US2) sont disposés de telle sorte que des aberrations géométriques de l'image, qui sont provoquées par une distance accrue entre la surface (OF) de l'objet et le détecteur (BS) d'enregistrement d'images, sont réduites et que la plage de la profondeur de champ est accrue.

2. Dispositif de contrôle suivant la revendication 1, caractérisé par le fait que le premier miroir de renvoi (US1) peut être rabattu de telle sorte qu'à l'état relevé, la lumière est dirigée sur le second miroir de renvoi (US2) et qu'à l'état rabattu vers le bas la lumière arrivant du dispositif d'éclairage (BE) parvient directement sur un troisième miroir de renvoi (US3), de manière à éclairer différentes surfaces (OF1,OF2) de l'objet (OB).

3. Dispositif de contrôle suivant l'une des revendications précédentes, caractérisé par le fait que le dispositif d'éclairage (BE) et le détecteur (BS) d'enregistrement d'images sont disposés de telle sorte que l'axe optique du détecteur (BS) d'enregistrement d'images et l'axe optique de la lumière du dispositif d'éclairage. (BE) sont perpendiculaires entre eux et rencontrent, en faisant respectivement un angle de 45°, les différentes faces d'un diviseur de faisceau (ST), et
qu'il est prévu un dispositif d'absorption de la lumière dans lequel est introduite la composante de lumière (LA) du dispositif d'éclairage (BE), qui n'est pas dirigée par le diviseur de faisceau sur la surface (OF).

4. Dispositif de contrôle suivant la revendication 3, caractérisé par le fait que le dispositif d'absorption de la lumière comporte un autre miroir qui dirige la composante de lumière (LA) qui est envoyée sur ce miroir, vers des parties noires et mates du boîtier.

5. Dispositif de contrôle suivant la revendication 4, caractérisé par le fait que ledit l'autre miroir est un miroir parabolique (PS).

FIG 1

EP 0 316 533 B1

FIG 2

EP 0 316 533 B1

FIG 3

EP 0 316 533 B1

FIG 4

EP 0 316 533 B1